# EUROPEAN PATENT SPECIFICATION

(11) **EP 4 316 323 B1**
(45) Date of publication and mention of the grant of the patent: **18.11.2026**
(21) Application number: 22188810.0
(22) Date of filing: 04.08.2022
(51) Int. Cl.: A47J 43/07

(54) **SYSTEM AND METHOD FOR RECIPE DEPENDENT CLEANING OF COOKING APPLIANCES**
SYSTEM UND VERFAHREN ZUR REZEPTURABHÄNGIGEN REINIGUNG VON KOCHGERÄTEN
SYSTÈME ET PROCÉDÉ DE NETTOYAGE D'APPAREILS DE CUISSON SELON LA RECETTE

(43) Date of publication of application: 07.02.2024
(73) Proprietor: Vorwerk & Co. Interholding GmbH, 42216 Wuppertal (DE)
(72) Inventor: Rodriguez Diez, Beatriz, 28023 Madrid (ES); Meyer, Frank, 58640 Iserlohn (DE)
(74) Representative: Fleuchaus & Gallo Partnerschaft mbB

(56) References cited:
- EP-A1- 3 269 280
- CN-A- 110 870 695
- CN-A- 111 427 270
- CN-A- 113 876 180

## Description

### Technical Field

The present invention generally relates to cooking apparatuses, and more particularly, relates to automated recipe dependent cleaning of such apparatuses.

### Background

Cooking apparatuses (cooking devices) have become more and more intelligent in the recent past by integrating multiple cooking functions into a single cooking apparatus. For example, modern cooking devices integrate functions, such as heating, mixing, boiling, pureeing, etc., in a single multi-function cooking device. A cooking device typically has to be operated with appropriate technical parameter settings (e.g., temperature settings, rotational speed settings, etc.) to ensure proper operation. Proper operation of a cooking device as used hereinafter refers to correct, safe and/or secure operation for producing reproducible cooking results with the cooking apparatus with regards to a particular food product.

Typically, the functions of such a multi-function cooking apparatus are controlled by one or more recipe programs which have instructions that are sequentially executed to arrive at the prepared food product or menu. For example, a recipe program can be loaded into the cooking apparatus for preparing a certain course of a menu and multiple courses can be prepared by processing respective recipe programs in a corresponding sequence. More complex food products typically require many different cooking steps where different ingredients are used to prepare intermediate food components which are needed for the final food product. At some stages of the cooking process, it can be necessary or at least advisable to clean the kitchen appliances which were used for preparing a certain food component before using such appliances for the next cooking step which may involve other ingredients to make sure that the next cooking step will result in the expected food component with the desired quality.

Primarily, a recipe program has recipe instructions for controlling cooking actions. It may not necessarily include instructions to control cleaning actions. A user may have difficulties to correctly decide when cleaning steps should be performed and how an optimal cleaning result can be achieved with regard to the previously executed cooking step(s). Subjective cleaning decisions of a user may result in too few or too many cleaning steps, cleaning steps at inappropriate stages of the cooking process and inappropriate setup for respective cleaning actions.

Chinese Patent Application CN111427270A discloses a self-cleaning method for kitchen machines where a cleaning mode is selected according to the recipe cooked last time based on the ingredients which were used during the cooking. That is, cleaning step adjustments during recipe execution are not supported. European Patent Application EP3269280A1 discloses a solution to reduce cleaning steps in separate recipes by combining separate recipes and rearrange food processing steps such that some cleaning steps can be eliminated. Chinese Patent Application CN110870695A discloses a cooking utensil self-cleaning method and a cooking utensil. The cooking utensil self-cleaning method comprises the steps of acquiring a degree of pollution in the cooking utensil, and a preset pollution threshold of the cooking utensil; judging that whether the cooking utensil needs to enter a self-cleaning program or not according to the degree of pollution and the preset pollution threshold, if yes, entering the self-cleaning program, and generating a self-cleaning command; and executing the self-cleaning command. Chinese Patent Application CN113876180 discloses self-cleaning method comprises the steps of determining making materials and making parameters corresponding to dish information; determining to-be-cleaned parameters corresponding to the dish information according to the making materials and the making parameters; determining the cleaning mode of the cooking equipment according to the to-be-cleaned parameters, determining the smudginess degree of the cooking equipment after the dishes are made according to the making materials and the making parameters of the dish information, determining different cleaning modes according to different smudginess degrees, and then using the cleaning modes for cleaning.

### Summary

There is therefore a need to avoid poor cleaning results caused by subjective cleaning decisions from a user. Such subjective cleaning decisions may result in cleaning actions which are not optimized with regard to the timing and the type of cleaning for achieving optimal cleaning results to guarantee high quality of the final food product.

The above problem is solved by embodiments as claimed by the independent claims: computer-implemented method for recipe dependent cleaning of a multifunction cooking apparatus, a computer program product with instructions configured to cause execution of said method when executing the computer program method, and a computer system which can load and execute said computer program product to execute said method.

Many food products can be prepared by a multifunction cooking apparatus alone. However, for more complex food products, multiple cooking apparatuses may be used in a joint cooking process for preparing a food product under the control of a lead apparatus (typically the multifunction cooking apparatus). Such further cooking apparatuses may include apparatuses of different device types (e.g., oven, microwave, or multi-function cooking apparatuses with different functional scopes - i.e., support of different cooking functions -, etc.). Therefore, besides the need to ensure proper cleaning of the multifunction cooking apparatus, in some situations there may also be a need to take care of the cleaning of such further cooking apparatuses. The need for a cleaning operation can be derived from the recipe instructions (program instructions of the recipe program) which are processed by the multifunction cooking apparatus. In other words, the herein disclosed method and system enables recipe dependent cleaning of the multifunction cooking apparatus. This concept can also be extended to be applied to remote cleaning appliances.

In one embodiment, a computer system is provided for controlling recipe dependent cleaning of a multifunction cooking apparatus having a bowl with an integrated heating element and an integrated stirring element. The stirring element may include asymmetric blades with two different edges - one edge being a sharp knife and the other edge being a blunt curve so that the rotation direction of the stirring element has a significant impact on the cooking result. The control system can be a separate system which is communicatively coupled with at least the multifunction cooking apparatuses, or it may be an integral component of the multifunction cooking apparatus.

The control system has an interface to receive a recipe program with a plurality of recipe instructions for the preparation of a food product wherein at least a subset of recipe instructions is to be executed in said bowl of the multifunction cooking apparatus. A recipe execution engine of the system executes the recipe instructions to control at least the execution of respective cooking steps by the multifunction cooking apparatus. As mentioned above, a recipe program may also include "external" recipe instructions which are finally to be executed by further cooking apparatuses. Nevertheless, the control system processes all recipe instructions irrespective of the executing apparatus. "External" recipe instructions are provided by the recipe execution engine to the respective apparatus for execution.

Further, the system has a cleaning control module with a recipe instruction analyzer module, a cleaning mode selector module, and a cleaning execution module.

The recipe instruction analyzer module analyzes the recipe instructions of a recipe program with regard to: a cooking mode of the multifunction cooking apparatus, one or more control parameters for said cooking mode, and one or more ingredient identifiers. For a particular recipe instruction, the analyzer performs at least the following checks:
- a mode-check to identify if the cooking mode belongs to a subset of cooking modes which require cleaning after execution. For example, a cooking mode "frying" may always require a cleaning action and would be included in said subset of cooking modes whereas a cleaning mode "boiling" (e.g., boiling water) may not necessarily require a cleaning action and would not be included in said subset.
- a temperature-control-parameter-check to identify if the temperature control parameter indicates a cleaning requirement, for example because it exceeds a predefined threshold. For example, a critical threshold for certain cooking modes (e.g., frying) is in the order of 85 degrees Celsius. It is to be noted that the temperature threshold alone cannot trigger a cleaning action. However, in combination with the cooking mode or the ingredients of the respective recipe instruction, a temperature control parameter exceeding said threshold may become decisive for the selection of a suitable cleaning mode. For recipe instructions which have no temperature control parameter it can be assumed that the respective cooking actions are performed at a temperature lower than the temperature of earlier cooking actions where the heating element was operated to achieve a certain temperature. That is, typically the temperature of a cooking action performed without the heating element being active is somewhere between the temperature of the previously executed cooking action and room temperature. Further control-parameter checks may be implemented as described later on.
- an ingredients-check to identify whether at least one of the ingredient identifiers or a particular combination of ingredient identifiers is associated with a subset of ingredients requiring cleaning after execution of the respective recipe instruction. Certain ingredients or combinations of ingredients may always require a cleaning action. For example, when mixing milk with eggs (for scrambled eggs) the bowl needs to be cleaned before executing a subsequent cooking step with other ingredients.

The recipe instruction analyzer module then determines one or more suitable cleaning modes for said bowl dependent on the results of the checks performed by the analyzer. For this purpose, a decision module (e.g., a decision tree, a rule-based decision system, etc.) is used. The results of the mode-check, temperature-control-parameter-check and ingredients-check are associated by the decision module with one or more suitable cleaning modes. For example, for a cooking mode "mixing" with ingredients "milk" and "eggs" at room temperature another cleaning mode is needed than for the cooking mode "frying" with ingredients "milk" and "eggs" at 70 degrees Celsius. Leftovers from finished scrambled eggs (after "frying") can be removed easier than the leftovers after "mixing". The decision module implements all such dependencies between cleaning modes and the various combinations of cooking mode, temperature-control-parameter and ingredient identifier(s) used in the recipe instructions of the recipe program. It can occur that the recipe instruction analyzer identifies multiple cleaning modes which may potentially be used. This can happen because the cooking mode of the recipe instruction may be associated with a first cleaning mode CM1 and the combination of ingredient identifiers in said recipe instruction may be associated with a second cleaning mode CM2. In general, a suitable cleaning mode is defined as a cleaning mode which can handle the expected dirt category (or level) caused by the execution of a cooking action for a respective recipe instruction. Thereby, the expected dirt category is a dirt category which can be derived from the recipe instruction parameters in anticipation of the corresponding cooking action. Typically, the dirt category depends on the adhesion of cooking leftovers on the surface of said bowl. The adhesion again depends on parameters like the cooking mode, cooking temperature and/or type of ingredients. For example, criteria which may be taken into account when defining cleaning modes include (but are not limited to): the expected burnt level of the cooking appliance (e.g., said bowl), expected level of dough leftovers, expected level of chopped ingredients pieces (e.g., onion pieces), expected level of oily or greasy film, expected leftovers from sugar or four.

The cleaning mode selector module selects, in accordance with predefined selection rules, a particular cleaning mode from the determined suitable one or more cleaning modes. Of course, in case only a single suitable cleaning mode is determined, this cleaning mode is selected. However, in situations where the determination module determines a plurality of suitable cleaning modes, the predefined selection rules are used by the selector module as a kind of conflict resolution mechanism to finally decide for one of the suitable cleaning modes. For example, a selection rule can define that always the cleaning mode with the strongest cleaning effect should be selected. A selection rule could also define that the cleaning mode with the lowest energy consumption or the lowest cleaning resource consumption is to be selected. Selection rules may also implement prioritization strategies in that for example for certain cooking modes the associated cleaning mode has priority over the cleaning mode associated with the ingredient identifier(s), or vice versa. Such prioritization strategies may also take into account the temperature-control-parameter. For example, only in combination with a temperature above the threshold the cleaning mode associated with cooking mode prevails over the cleaning mode associated with the ingredient(s). Other cooking control parameters may also be taken into account by the prioritization strategies.

A cleaning mode in general defines the setting of one or more cleaning control parameters of the cooking apparatus for performing a respective cleaning action. In other words, a cleaning mode is a kind of template that includes a control parameter setting suitable to achieve a certain cleaning result when executed by the multifunction cooking apparatus. Example control parameters which may be defined by a particular cleaning mode comprise: rotational-speed and/or rotation direction of the stirring element, cleaning duration, temperature, quantity of cleansing agent, etc.

In case the respective (currently processed) recipe instruction is not associated with a non-cleaning indicator in the recipe program, the cleaning execution module executes the selected cleaning mode after completed execution of the respective recipe instruction. Executing the cleaning mode as used herein means to provide the associated cleaning control parameters to the respective cooking or cleaning appliance (in the case of a multifunction cooking apparatus the cooking appliance is also the cleaning appliance when being operated with a cleaning mode) where a corresponding cleaning action is performed in accordance with the cleaning control parameters. In other words, the execution of the selected cleaning mode for a particular recipe instruction depends on the prior execution of the recipe instruction by the recipe execution engine and the completion of the respective cooking action. Only if the corresponding cooking action has terminated the execution of the cleaning action with the selected cleaning mode makes sense. Typically, the execution of this cleaning action is performed by the multifunction cooking apparatus right after the termination of the respective cooking step. Once the cleaning action is finished, the cleaning execution module triggers the analyzer module to proceed with the next recipe instruction. In case the respective recipe instruction is associated with a non-cleaning indicator in the recipe program the analyzer module is triggered right to proceed with the next recipe instruction without executing the cleaning action for the selected cleaning mode. Non-cleaning indicators can be associated with recipe instructions where typically the cleaning control module would determine that a cleaning after the execution of the recipe instruction would be needed based on the performed checks. However, the recipe designer when creating the recipe program may want to prevent an execution of a cleaning action at this time during recipe execution, perhaps because the subsequent step uses the same ingredients, or for some other reasons. In such cases, the recipe designer can associate the respective recipe instruction with a non-cleaning indicator which results in the above-described effect that the selected cleaning mode would not be used for executing a corresponding cleaning action. Typically, non-cleaning indicators can be used to consolidate a series of consecutive recipe instructions into a single cleaning action taking into account the whole series of consecutive recipe instructions (cf. consolidation embodiment).

In one embodiment, a computer-implemented method is provided which comprises the steps executed by the above-described control system for recipe dependent cleaning of a multifunction cooking apparatus having a bowl with an integrated heating element and an integrated stirring element. The steps include: analyzing the respective recipe instruction with regard to: a cooking mode of the multifunction cooking apparatus, one or more control parameters for said cooking mode, and one or more ingredient identifiers. The analyzing step includes performing a mode-check to identify if said cooking mode belongs to a subset of cooking modes which require cleaning after execution, performing a temperature-control-parameter-check to identify if the temperature control parameter indicates a cleaning requirement (e.g., exceeds a predefined threshold), and performing an ingredients-check to identify whether at least one of the ingredient identifiers or a particular combination of ingredient identifiers is associated with a subset of ingredients requiring cleaning after execution of the respective recipe instruction.

Further, the method includes determining one or more suitable cleaning modes for said bowl dependent on the results of the mode-check, temperature-control-parameter-check and ingredients-check by using a decision module which associates one or more cleaning modes with the cooking mode, temperature-control-parameter and the one or more ingredient identifiers of the respective recipe instruction; selecting, in accordance with predefined selection rules, a particular cleaning mode from the suitable one or more cleaning modes; if the respective recipe instruction is associated with a non-cleaning indicator in the recipe program, proceeding with the next recipe instruction; and else, executing the selected cleaning mode after completed execution of the respective recipe instruction and proceeding with the next recipe instruction.

In one embodiment, a computer program product is provided for recipe dependent cleaning of a multifunction cooking apparatus. The computer program product comprises computer readable instructions that, when loaded into a memory of a computing device (e.g., said control/computer system) and executed by at least one processor of the computing device, cause the computing device to perform the herein disclosed method.

In the following, some optional features of the control system and the computer implemented method are described.

In one embodiment, the control system further includes a cleaning mode consolidation module. The consolidation module gets active if the currently processed recipe instruction is associated with a non-cleaning indicator in the recipe program. In this embodiment, instead of directly triggering the analyzer to proceed with the next recipe instruction, the selected cleaning mode for the respective recipe instruction is stored at an appropriate storage location (within the control system or at a remote storage location). While the cleaning control module loops over the recipe instructions of the recipe program, the consolidation module consolidates the stored cleaning mode with one or more stored or selected cleaning modes of further consolidated recipe instructions. This allows to adjust the control parameters of the resulting consolidated cleaning mode to remove dirt resulting from all respective cooking steps (i.e., the pollution of the cooking appliance caused by cooking actions) when executing the consolidated cleaning mode after completed execution of the first consolidated recipe instruction not being associated with a non-cleaning indicator. In other words, as long as subsequent recipe instructions are associated with a non-cleaning indicator, the consolidation module collects the control parameter information of the selected cleaning modes for each of these subsequent recipe instruction and derives a consolidated parameter setting for each of the cleaning mode control parameters which ensures proper cleaning of the bowl of the cooking apparatus right after the first recipe instruction that is again not associated with a non-cleaning indicator. This embodiment allows to reduce the number of cleaning options for a recipe in for such recipes where a series of cooking steps can be executed in a row without risking the quality of the prepared food components even when not performing a cleaning action after each cooking step. Details are described in the detailed description.

In an equivalent embodiment, a person skilled in the art will understand that in cases where a non-cleaning indicator is associated with a particular recipe instruction and consolidation is intended, the analysis of the recipe instruction and the determining of suitable cleaning modes as well as the selecting of a cleaning mode can also be performed at a later stage (e.g., when the last to-be-consolidated recipe instruction is processed). In other words, the analyzer module and the selector module may initially skip each recipe instruction associated with a non-cleaning indicator and then perform the above-described checks and selections for all the skipped recipe instructions when processing the first recipe instruction with no non-cleaning indicator following the skipped recipe instructions. In this embodiment, instead of buffering the selected cleaning modes consecutive recipe instructions with non-cleaning indicators can be buffered so that, when processing the last to-be-consolidated recipe instruction, the RI-analyzer and selector still can access the parameters of the skipped recipe instructions which are relevant for performing the respective checks.

In one embodiment, the analyzer module may be adapted to perform one or more further checks with regard to any of the following additional parameters: rotational-speed-control parameter for the stirring element, rotation-direction-control parameter, ingredient quantities, time interval between the end of the cooking step associated with the respective recipe instruction and the beginning of the cooking step associated with the subsequent recipe instruction, and relative time point associated with the respective recipe instruction in relation to the overall execution time of the entire recipe program. In this embodiment, the decision module and the predefined selection rules are further adapted such that the determination module and the selector module take the additional parameters into account.

In one embodiment, the cleaning control module further includes a parameter adjustment module to adjust default control parameters of the selected cleaning mode in accordance with a predefined dependency on a lead indicator of the respective recipe instruction. The adjustment module can further adjust the default control parameter values of the selected cleaning mode in relation to the actual control parameters of the respective recipe instruction. Typically, the lead indicator is the temperature-control parameter value in the recipe instruction. If there is no temperature-control parameter, the lead-indicator is the combination of ingredients in said recipe instruction. Details are described in the detailed description. The parameter adjustment module increases the flexibility with regard to the cleaning control parameter settings. It allows to work with a relatively small number of default cleaning modes (templates) and adjust the parameter settings on the fly based on the actual lead indicator in the respective recipe instruction.

In one embodiment, the control system processes a recipe program that also includes external recipe instructions to be executed by one or more further kitchen appliances (e.g., pan, pot, cutting board, etc.) requiring cleaning by a remote cleaning appliance. In this embodiment, the analyzer module also analyzes such external recipe instructions and an appropriate cleaning mode is determined and selected for the remote appliance. Thereby, the cleaning mode selected for the remote cleaning appliance includes cleaning control parameters for said remote cleaning appliance. This allows to integrate specialized remote cleaning appliances in the cleaning process in particular with regard to further cooking appliances which are used together with the multifunction cooking apparatus in a joint cooking process.

In one embodiment, the selected cleaning mode may be replaced (overwritten) by a cleaning mode received from a user of the cooking apparatus. This gives final control over the cleaning action to a user in cases where the user is not satisfied with the selected cleaning mode.

Further aspects of the invention will be realized and attained by means of the elements and combinations particularly depicted in the appended claims. It is to be understood that both the foregoing general description and the following detailed description are exemplary and explanatory only, and are not restrictive of the invention as described.

### Brief Description of the Drawings

FIG. 1 illustrates a block diagram including a control system for recipe dependent cleaning of cooking apparatuses according to an embodiment;
FIG. 2 is a simplified flow chart illustrating a computer-implemented method for recipe dependent cleaning of cooking apparatuses according to an embodiment;
FIG. 3 schematically shows a portion of a recipe program with a plurality of recipe instructions;
FIGs. 4A, 4B illustrate example records of a cleaning requirements database according to an embodiment;
FIG. 4C illustrates examples of selection rules according to an embodiment;
FIG. 5 illustrates examples for cleaning control parameter adjustments depending on a lead indicator; and
FIG. 6 is a diagram that shows an example of a generic computer device and a generic mobile computer device, which may be used in embodiments of the invention.

### Detailed Description

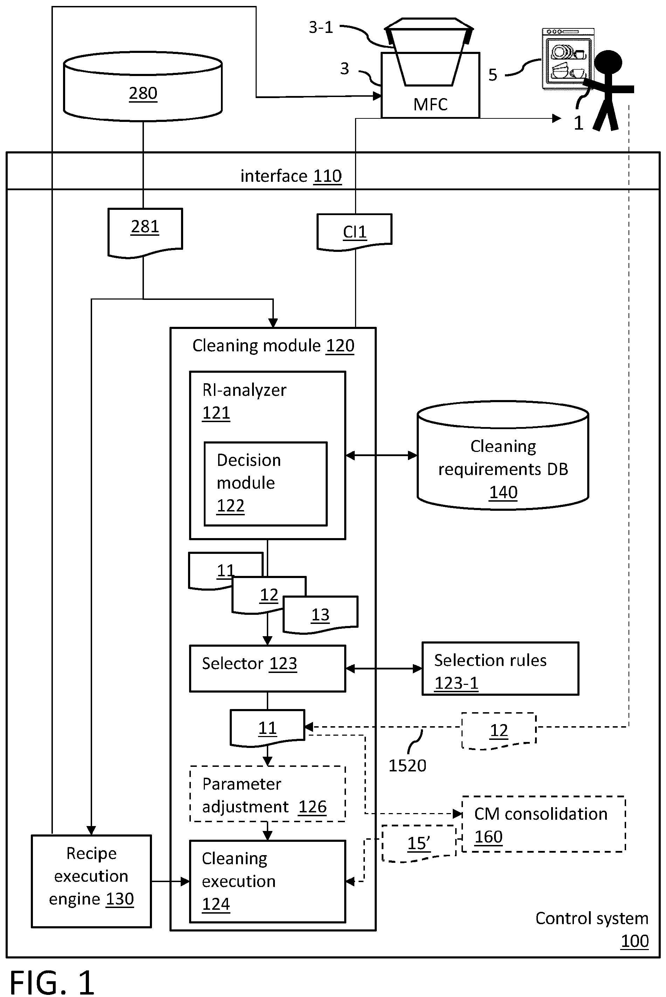

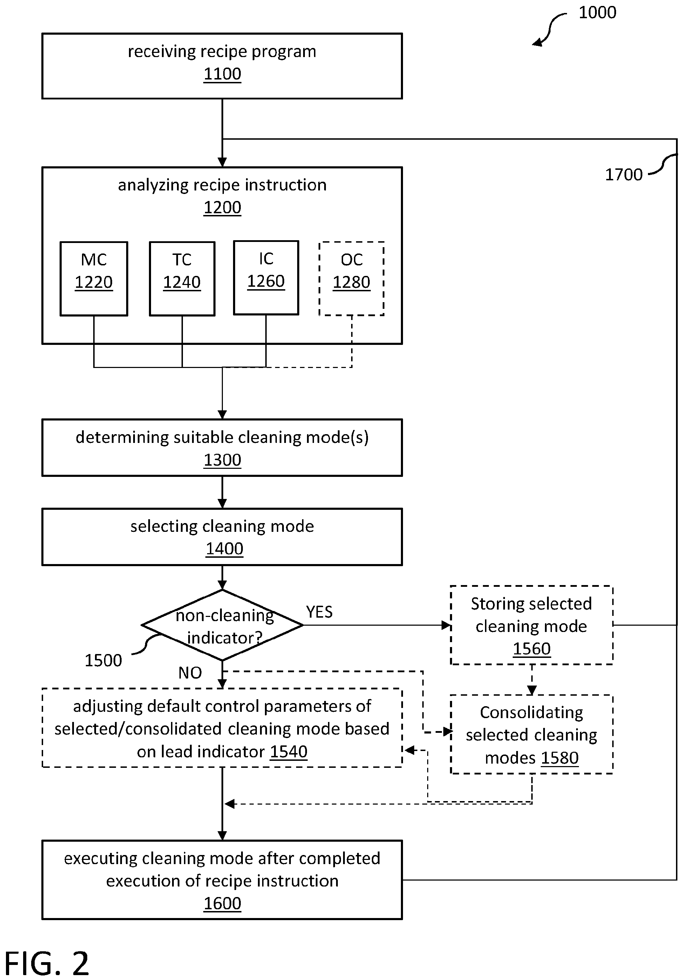

FIG. 1 illustrates a block diagram including a control system 100 for recipe program execution and recipe dependent cleaning of a multifunction cooking apparatus (3). FIG. 2 is a simplified flow chart of a computer implemented method 1000 for recipe dependent cleaning of a multifunction cooking apparatus according to an embodiment. FIG. 1 is described now in the context of FIG. 2. For this reason, reference numbers of FIG. 1 and FIG. 2 are used in the following description.

In the example of FIG. 1, the control system 100 (implemented by a computer system) is communicatively coupled with a recipe storage 280. The recipe storage 280 can also be an integral component of the system 100, or it may be a remote data storage system accessible via the interface 110. The recipe storage 280 storing a plurality of recipe program files with machine readable recipe instructions for preparing food products. Typically, a cooking user 1 can select a particular recipe 281 for preparing a particular food product while interacting with the control system 100. For interaction with the user 1, the interface 110 may also implement a suitable user interface. Once the user 1 has made a selection of a particular food product to be prepared, the control system receives 1100 the associated recipe program file 281 (e.g., via a download of the recipe program file from the recipe storage 280).

The recipe program file 281 includes recipe instructions which are configured to be executed by the multifunction cooking apparatus (MFC) 3. A recipe execution engine 130 of system 100 processes the recipe instructions and controls the execution of respective cooking steps by MFC 3. MFC 3 has a bowl 3-1 with at least an integrated heating element and an integrated stirring element. Other cooking functions, such as for example scales for determining the weight of ingredients, can also be integral functions of MFC. The heating and stirring elements can be flexibly operated so that various cooking modes can be triggered by the recipe instructions via respective control parameters. The recipe program may also include "external" recipe instructions to be executed by further cooking apparatuses (not shown) to perform a joint cooking process with the multifunction cooking apparatus 3.

The interface 110 is adapted to receive 1100 the recipe program 281 with a plurality of recipe instructions for the preparation of a food product. At least a subset of the recipe instructions is executed in the bowl 3-1 in accordance with the control parameters provided by the recipe execution engine 130. In this function, the interface 110 represents a machine-machine interface between the control system 100 and the recipe storage 280 which can be implemented as a database, file system or the like. The interface may also include a human-machine interface (e.g., a graphical user interface and/or a voice interface) which allows the user 1 to interact with the control system 100 (e.g., for selecting a recipe from the recipe storage, or, in an optional embodiment, for selecting a cleaning mode).

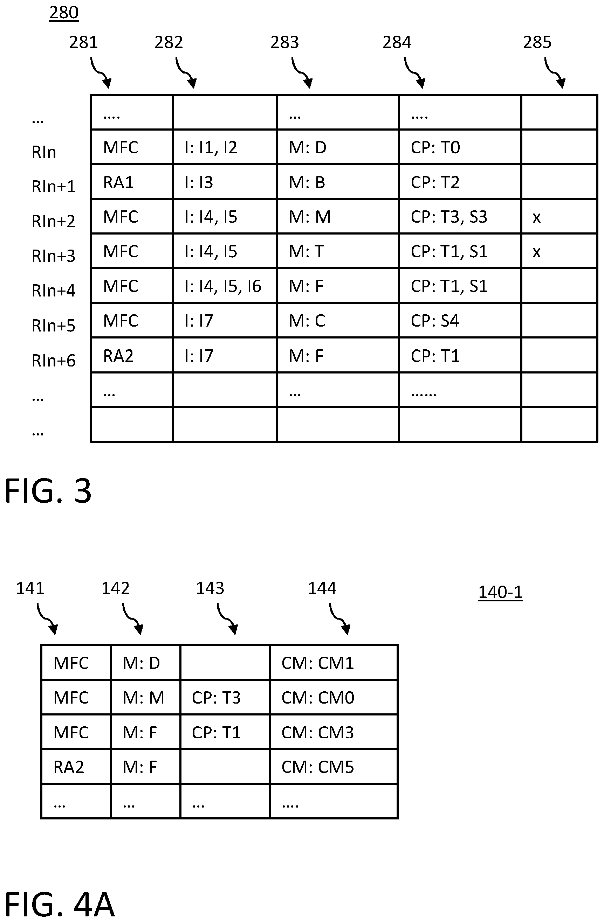

The system 100 further includes a cleaning control module 120 with at least the following sub-modules: an instruction analyzer module 121, a cleaning mode selector module 123, and a cleaning execution module 124. The function of the various sub-modules will now be described in detail. For the explanation reference is made to the schematic example recipe 280 illustrated in FIG. 3

The recipe instruction analyzer module 121 analyzes 1200 a respective recipe instruction with regard to: a cooking mode 283 of the multifunction cooking apparatus MFC, one or more control parameters 284 for said cooking mode, and one or more ingredient identifiers 282. In the example recipe 280 of FIG. 3, a subset of consecutive recipe instructions Rln to RIn+1 is illustrated. There may be recipe instruction preceding and succeeding the subset [Rln, RIn+1] as indicated by the "..." characters. In the example, the first column 281 includes a cooking device identifier. Instructions with a cooking device identifier MFC are to be executed by the multifunction cooking apparatus MFC. The recipe instruction RIn+1 is an "external instruction" to be executed by a remote appliance RA1. Also, the recipe instruction RIn+6 is an "external instruction" to be executed by a further remote appliance RA2.

The recipe instruction analyzer module 121 (RI-analyzer) analyzes 1200 at least the recipe instructions which relate to the multifunction cooking apparatus MFC. However, in optional embodiments, also the "external instructions" may be analyzed. For this analysis, the RI-analyzer performs at least three different checks for a respective recipe instruction.

A first check performed by the RI-analyzer is a mode-check 1220 to identify if the cooking mode belongs to a subset of cooking modes which require cleaning after execution. In the example of FIG. 3, the recipe instruction RIn triggers the execution of a cooking mode "D" in the MFC. Cooking modes which require a cleaning action after termination of the respective cooking action may be registered in a cleaning requirements database (DB) 140. DB 140 can be an integrated components of system 100 or it may be stored on a remote storage which can be accessed by the RI-analyzer. In the following, DB 140 is described as a relational database. However, a skilled person can also use different data structures which allow to defined dependencies between objects (e.g., ontologies).

In FIG. 4A table 140-1 shows and example data structure which may be used in a database table of DB 140 to register dependencies between cooking modes 141 and cleaning modes 144 for various cooking appliances 141. In the example, cooking mode "D", when executed by MFC, is associated with cleaning mode "CM1". That is, cooking mode "D" always requires a subsequent cleaning action with "CM1" irrespective of the other control parameters in the recipe instruction. The registry table 140-1 can also include such dependencies for remote appliances (e.g., RA2 cooking mode "F" requires a cleaning action with cleaning mode "CM5"). The first check, when being applied to the example recipe 280 of FIG. 3 using the dependencies of registry table 140-1, also identifies a need for a cleaning action (CM0) for recipe instruction RIn+2, and for a further cleaning action (CM3) for recipe instruction RIn+4. In an embodiment where also "external instructions" are analyzed, also for recipe instruction Rln+6 the cooking mode "F" is associated with a corresponding cleaning mode "CM5" in registry table 140-1.

In the example, other MFC cooking modes "M" and "F" also require cleaning actions but only if executed at a certain temperature 143 (e.g., "M" at T> "T3" → "CM1", "F" at T> T1 → "CM3"). For this purpose, a second check performed by the RI-analyzer in this example is a temperature-control-parameter-check 1240 to identify if the temperature control parameter exceeds a predefined threshold. In other words, if the cooking mode in the analyzed recipe instruction is listed in registry table 140-1 but only requires cleaning if being executed above a certain threshold temperature, the second check compares the temperature control parameter of the recipe instruction with the respective threshold temperature 143. In case the temperature control parameter exceeds this threshold value, the execution of recipe instruction by the cooking apparatus requires a cleaning action with the associated cleaning mode.

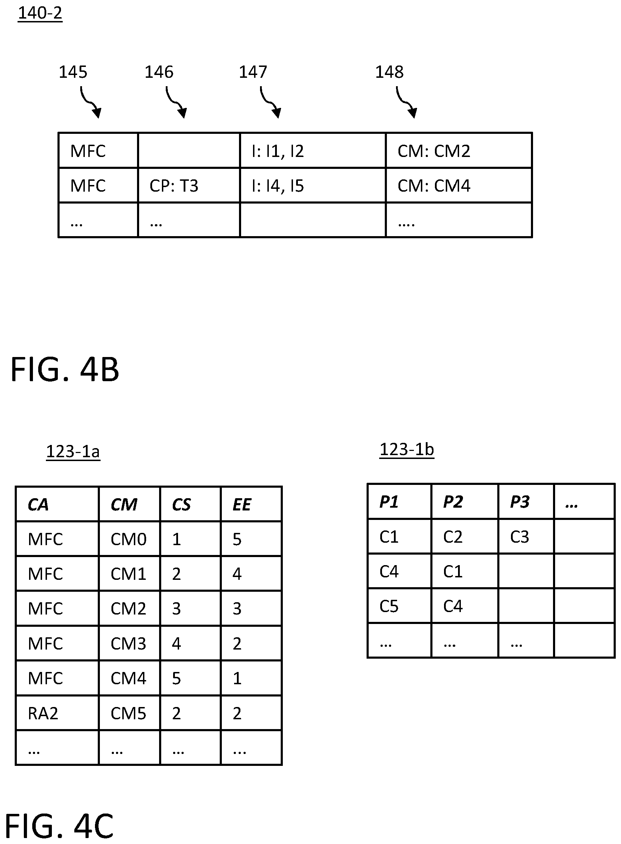

Another source for a cleaning requirement can be the type of ingredients being processed by the cooking action when executing the recipe instruction. Therefore, a third check performed by the RI-analyzer is an ingredients-check 1260 to identify whether at least one of the ingredient identifiers or a particular combination of ingredient identifiers is associated with a subset of ingredients requiring cleaning after execution of the respective recipe instruction. For the third check, a further table of DB 140 can be used. A simplified data structure example 140-2 for such a table is illustrated in FIG. 4B. Table 140-2 illustrates dependencies between ingredients 147 and cleaning modes 148 for a given cooking apparatus 145. As for the dependencies between cooking modes and cleaning modes, also for the dependencies between ingredients and cleaning modes the temperature control parameter may play an important role. For certain ingredients of combinations of ingredients (e.g., "I1+I2") a cleaning action (CM2) may be required irrespective of the temperature. For other ingredients/combinations, a cleaning action may only be necessary if the cooking action is performed above a threshold temperature 146. In the example of FIG. 4B, the combination "I4+I5" requires a cleaning action (CM4) only if the temperature control parameter of the recipe instruction exceeds "T3".

The RI-analyzer 121 may also implement further checks 1280 if the cleaning mode which specifies the cleaning parameters depends on other control parameters (e.g., the rotation speed/rotation direction of the stirring element and/or the duration of the stirring action).

The RI-analyzer 121 then determines 1300 one or more suitable cleaning modes 11, 12, 13 for the MFC bowl 3-1 dependent on the results of the mode-check, temperature-control-parameter-check and ingredients-check. For that purpose, it uses a decision module 122 which associates one or more cleaning modes with the combination of cooking mode, temperature-control-parameter and the one or more ingredient identifiers of the respective recipe instruction when comparing the currently processed recipe instruction with the information stored in DB 140.

With regard to RIn of the example of FIG. 3, after applying the first check, the decision module 122 determines "CM1" as a suitable cleaning mode in accordance with the first-row entry in registry table 140-1 based on the cooking mode "D". A second suitable cleaning mode "CM2" is determined in accordance with the first-row entry of table 140-2 based on the ingredient identifiers "I1", "I2" of RIn. In general, the decision module compares all parameters of the currently processed recipe instruction with the cleaning mode dependencies provided in DB 140. Each match results in a suitable cleaning mode.

In cases where only a single cleaning mode is determined by the decision module, the cleaning mode selector module 123 selects 1400 the determined cleaning mode (default selection rule). However, in cases where the decision module has determined more than one suitable cleaning mode (e.g., "CM1" and "CM2" for RIn), the selector selects 1400 a particular cleaning mode 11 from the suitable one or more cleaning modes 11, 12, 13 in accordance with predefined selection rules 123-1. FIG. 4C illustrates some examples for predefined selection rules 123-1a, 123-1b. For example, the selector may use rankings according to certain prioritization criteria such as the cleaning strength CS rf the energy efficiency EE of the cleaning modes CM.

Table 123-1a shows an example of such rankings for the cleaning modes "CM0" to "CM5" (with "CM0" to "CM4" associated with the MFC cooking appliance (CA) and "CM5" associated with "RA2"). In case the selector would use a selection rule to select the suitable CM with the highest CS, "CM2" would be selected (CS=3). In case the selection rule is looking for the highest energy efficiency, "CM1" would be selected (EE=4). Table 1231b illustrates and example of condition-based selection rules which are more complex than priority rankings but which also allow for greater flexibility of the decision module. For example, specific predefined conditions ("C1" to "C5") which reflect parameter combinations of the recipe instructions may be prioritized. For example, the first row of table 123-1b indicates that if a recipe instruction includes conditions "C1" to "C3" then the priority for the respective cleaning mode is highest for "C1" (P1) and lowest for "C3" (P3). With regard to RIn it is assumed that "C1" corresponds to the condition "I1, I2 at T0" and "C2" corresponds to the condition "D at T0". Applying the corresponding selection rule of table 123-1b, the condition "I1, I2 at T0" has the highest priority and therefore the selector selects "CM2" which is associated with "I1, I2" at any temperature (cf. table 140-2, FIG. 4B). This high granularity in cleaning mode selection allows a highly effective cleaning mode selection to identify the best available cleaning mode for any potential cooking situation (and therefore for any respective recipe instruction).

In case check 1500 reveals that no non-cleaning indicator is associated with the currently processed recipe instruction, a cleaning action with the selected cleaning mode 11 is executed 1600 by the cleaning execution module 124 right after the termination of the cooking step triggered by the respective recipe instruction (i.e., after completed execution of the respective recipe instruction). For example, RIn of FIG. 3 has no non-cleaning indicator 285. Therefore, the selected cleaning mode 11 ("CM1" or "CM2" dependent of the predefined selection rule) is executed on MFC 3 once the recipe execution engine 130 has notified the cleaning execution module 124 that the cooking action for RIn has been completed (and before the recipe execution module triggers the cooking action associated with the next recipe instruction). Executing the cleaning action 1600 includes to send cleaning control parameters Cl1 of the selected cleaning mode 11 to MFC 3. The cleaning control parameters of the selected cleaning mode may include one or more of the following: rotational-speed, rotation direction, cleaning duration, temperature, quantity of cleansing agent. Once the cleaning action is completed, the RI-analyzer 121 proceeds/continues 1700 with the subsequent recipe instruction.

If a non-cleaning indicator is associated with the currently processes recipe instruction (e.g., RIn+2, Rln+3 in the example of FIG. 3), the cleaning control module continues 1700 with the next recipe instruction without executing the selected cleaning mode.

In an optional embodiment, the RI-analyzer 121 may perform one or more further checks 1280 with regard to any of the following additional parameters: rotational-speed-control parameter for the stirring element, rotation-direction-control parameter, ingredient quantities, time interval between the end of the cooking step associated with the respective recipe instruction and the beginning of the cooking step associated with the subsequent recipe instruction, and relative time point associated with the respective recipe instruction in relation to the overall execution time of the entire recipe program. In this embodiment, DB 140 may define further dependencies of cleaning modes on such additional parameters. The decision module 122 can take the additional parameters into account when identifying suitable cleaning modes. Further, the selection rules 123-1 may include conditions for prioritizing the cleaning modes which include such additional parameters.

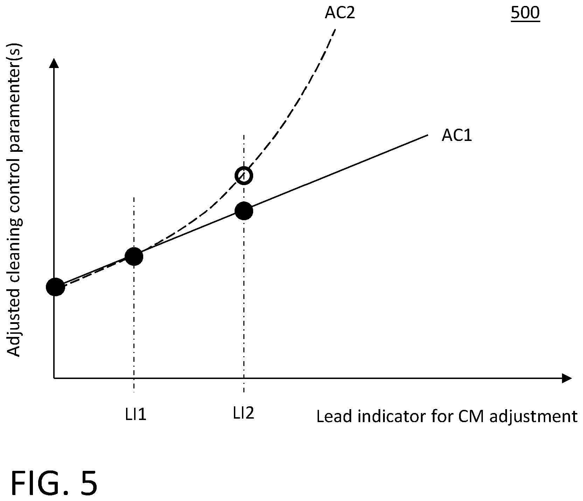

In one embodiment, system 100 further includes a parameter adjustment module 126 to adjust 1540 default control parameters of the selected cleaning mode 11 in accordance with a predefined dependency on a lead indicator of the respective recipe instruction. Thereby, typically lead indicator is the temperature-control-parameter of the respective recipe instruction. The basic assumption behind the cleaning control parameters is that the dirt category/level caused by a cooking action generally varies (typically increases) with the cooking temperature. FIG. 5 illustrates the concept of cleaning control parameter adjustment by way of example by using two different adjustment curves AC1, AC2. In diagram 500, the X-axis is the lead indicator and the y axis illustrates the cleaning control parameter adjustment in dependence of the lead indicator. The left bullet on the y-axis represents a default cleaning control parameter of the selected cleaning mode. The selected cleaning mode has been defined for a certain expected dirt level. For example, the cleaning mode was defined for cleaning said bowl after a frying action at 90 degrees. Assuming that the currently processed recipe instruction relates to a frying action at 100 degrees, the expected dirt level is higher. In this example, the lead indicator L1 is the cooking temperature and the cleaning control parameter(s) is/are adjusted in accordance with a predefined adjustment curve. The adjustment curve can be a linear curve AC1, an exponential curve or any other appropriate curve AC2 which reflects the increased cleaning effort which is required due to the higher cooking temperature LI1 (compared to the expected cooking temperature). The adjusted cleaning control parameter for the lead indicator LI1 is represented by the middle bullet. If the control parameter for the cooking temperature is even higher (LI2), then a stronger parameter adjustment may be applied resulting in the right solid bullet when using AC1, or the circle when using AC2.

For certain ingredients the combination of ingredients becomes more relevant with regard to the expected dirt category than the temperature control parameter. For such combinations of ingredients (in particular when kneading dough), the combination of ingredients may become the lead indicator of the cleaning control parameter adjustment. However, the same principles can be applied as for the temperature lead indicator.

The user 1 may be prompted with the selected cleaning mode 11 or the respectively adjusted cleaning mode via the human-machine interface. On the one hand this can be used for guiding the user through the cleaning action with regard to manual activities which need to be performed in addition to the automated cleaning action performed by the MFC in response to the cleaning control instructions. An example for such a manual activity is the adding of the right amount of detergent. On the other hand, the system 100 can offer the user 1 the possibility to overwrite the selected/adjusted cleaning mode via the human-machine interface. For example, the use may be allowed to manually select another cleaning mode 12 and submit the manual selection 12 to the cleaning control module 120 to replace 1520 the selected cleaning mode 11. Optionally, the received manually selected cleaning mode 12 is again processed by the parameter adjustment module 126 to adjust the cleaning control parameters dependent on the lead indicator.

Going back to the recipe example of FIG. 3, once the cleaning action for RIn has been completed, the RI-analyzer proceeds with the next recipe instruction RIn+1. This instruction is an "external instruction" which is directed to a remote appliance RA1. Nevertheless, RA1 may also require a cleaning action after completion of the cooking action performed through the execution of RIn+1. In this case, a remote cleaning appliance 5 (e.g., a dish washer) may be needed to execute the respective cleaning action. Otherwise, the same procedure as for the MFC recipe instructions can also be applied to such "external instructions". That is, the RI-analyzer analyzes such external recipe instructions and determines one or more suitable cleaning modes for the remote appliance RA1. The selector selects a particular cleaning mode in accordance with the predefined selection rules for RA1. This selected cleaning mode includes control parameters for the remote cleaning appliance 5. A corresponding cleaning instruction is then transmitted to the remote cleaning appliance 5.

In the following an embodiment is described which allows the cleaning control module to consolidate multiple recipe instructions into a single cleaning action by using a cleaning mode consolidation module 160. This is enabled through the use of non-cleaning indicators 285 associated with certain recipe instructions of the recipe 280. In the example of FIG. 3, non-cleaning indicators are represented with "x"-characters. A person skilled in the art can use other implementations for implementing this flag. The instructions RIn+2 and Rln+3 are associated with such a non-cleaning indicator. That is, in the flow chart of FIG. 2, the check 1500 results in YES. In the main embodiment, the RI-analyzer would directly continue 1700 with the next recipe instruction and simply ignore the selected cleaning mode by not executing a cleaning action. However, in the consolidation embodiment, the selected cleaning mode for the respective recipe instruction is stored 1560 in a memory of system 100.

For Rln+2 the RI-analyzer determines the suitable cleaning modes "CM0" (based on cooking mode and the temperature control parameter) and "CM4" (based on the combination of ingredients and the temperature control parameter. It is assumed that the predefined selection rule in this case selects "CM4" as the cleaning mode with the appropriate cleaning strength (CS=5) to remove all leftovers from I4, I5. That is, "CM4" is stored 1560 (i.e., buffered to be used in the following cleaning consolidation process).

For Rln+3 the same process is repeated because of a respective non-cleaning indicator. It is assumed that the selected cleaning mode for Rln+3 ("CM5") has a stronger cleaning effect than the cleaning mode selected for Rln+2. Again, system 100 buffers 1560 the selected cleaning mode "CM5" for RIn+3. The CM consolidation module 160 can now consolidate 1580 the buffered cleaning modes. The consolidation may be based on predefined consolidation rules which may be the same as the predefined selection rules 123-1. However, a skilled person may also define a separate consolidation rule set which provides the logic to determine a consolidated cleaning mode based on all buffered cleaning indicators resulting from recipe instructions with non-cleaning indicators. The buffering of selected cleaning modes continues until again a recipe instruction without a non-cleaning indicator is processed. In the example of FIG. 3, this recipe instruction corresponds to RIn+4. It is assumed that entries in DB 140 and the selection rules 123-1 result in the selected cleaning mode "CM3" for RIn+4. In this case the consolidation module would provide a consolidated cleaning mode 15' which, for example, may be determined as the strongest cleaning mode "CM5" of the buffered cleaning modes and the currently selected cleaning mode. Other consolidation rules may used instead. In other words, in case a recipe instruction without a non-cleaning indicator follows on a recipe instruction having a non-cleaning indicator, the consolidation module takes into account the buffered cleaning mode(s) and the currently selected cleaning mode to compute the consolidated cleaning mode 15'.

The consolidated cleaning mode 15' may then provide the cleaning control parameters which are suitable to remove the dirt caused by the cooking actions triggered by recipe instructions RIn+2, Rln+3 and Rln+4. In one implementation, prior to execution, the parameters of the consolidated cleaning mode may be adjusted by the adjustment module 126. In this implementation, the lead indicators of the respective recipe instructions may also be buffered together with the selected cleaning modes so that the adjustment module 126 becomes aware of the lead indicator for the consolidated cleaning mode 15' and performs a corresponding parameter adjustment of the cleaning control parameters prior to sending the control instructions to the cooking apparatus (or external cleaning appliance). The cleaning action with the cleaning control parameters of the consolidated cleaning mode (or the respectively adjusted cleaning control parameters) is then executed once the cooking action triggered by the recipe instruction having no non-cleaning indicator and following one or more recipe instructions with non-cleaning indicator is completed.

After having described the invention with the generalized examples of FIGs. 3, 4A, 4B, and 4C, a more specific real-world recipe example is discussed in the following to illustrate the functioning of system 100 in even more detail. For this purpose, a portion of a recipe for preparing bechamel potatoes with eggs is schematically illustrated in table 1:

**Table 1 - recipe instructions for preparing bechamel potatoes with eggs**

| CA | I | M | CP | NCI |
|---|---|---|---|---|
| ... | ... | ... | ... | ... |
| MCF (a) | + 700 g water | steaming | Time: 33 min | |
| | + TS salt | | | |
| | + 1 kg potatoes | | | |
| MCF (b) | 1 onion | chopping | Time: 4 sec | x |
| | | | Speed: 5.5 | |
| | | | Direction: right | |
| MCF (c) | + 100 g cottage ham | stewing | Time: 3 min | x |
| | + 40 g butter | | Temp: 100 | |
| | | | Speed: 1 | |
| | | | Direction: left | |
| MCF (d) | + 40 g flour | stewing | Time: 1 min | x |
| | | | Temp: 100 | |
| | | | Speed: 1 | |
| | | | Direction: left | |
| MCF (e) | + 200 g water | heating | Time: 6 min | x |
| | + 400 g milk | | Temp: 90 | |
| | + TS spice paste | | Speed: 3 | |
| | + pinch of pepper | | Direction: left | |
| MFC (f) | + steamed potatoes (peeled and sliced) | Letting steep | Time: 1 min | |
| MFC (g) | 4 eggs | egg | Time: 3 min | |
| ... | ... | ... | ... | ... |

Column CA indicates the cooking apparatus for executing a cooking action which is specified by the respective recipe instruction by the ingredient identifiers (column I), the cooking mode (column M), and the control parameters (column CP). Each row of table 1 specifies such a recipe instruction. An "x" in column NCI indicates a non-cleaning indicator for the respective recipe instruction. The letters (a) to (g) in column CA only represent references to the respective recipe instructions which are used in the following description for unambiguously referencing a certain recipe instruction. They do not form part of the actual recipe program.

Assuming that the recipe execution and cleaning execution for recipe instructions prior to (a) are completed, the RI-analyzer processes instruction (a) which has no non-cleaning indicator. "steaming" is a cooking mode in which only salty water is in the bowl of the MFC. The potatoes (or other to-be-steamed ingredients) are thereby placed in a specific steam attachment. Therefore, the cooking mode steaming is associated with the lowest cleaning mode "rinsing with cold water" in the cleaning requirements database. As a result, this cleaning mode is selected by the selector. No parameter adjustment is necessary in this case and the corresponding cleaning control parameters are provided to the MFC to perform the corresponding cleaning action right after the completion of the steaming cooking step.

After the bowl has been rinsed with cold water, the bowl is used for performing the cooking actions related to recipe instructions (b) to (f). (b) has the cooking mode "chopping" which per se may not be associated with a particular cleaning mode. However, the MFC chops an onion (at room temperature - no temperature control parameter) which normally requires a cleaning action before continuing with the recipe processing. Therefore, a relatively low cleaning mode is determined and selected for (b) based on the ingredient identifier. In this case, a relatively weak cleaning mode (for example, "rinsing with hot water") can be sufficient. However, (b) has a non-cleaning indicator. Therefore, it can be advantageous to use the embodiment with the consolidation module which buffers the cleaning mode "rinsing with hot water".

Then, the RI-analyzer proceeds with (c) where cottage ham and butter are added to the chopped onion and are stewed at 100 degrees centigrade for three minutes at a low speed (speed 1) of the stirring element in the non-cutting rotation direction. Of course, "stewing" at 100 degrees causes as significantly higher dirt level compared to the chopping in (b). In this step, "stewing" at temperature "100" is associated with a cleaning mode using a "washing-up liquid". The combination of the ingredient identifier "butter" and the high temperature ("100") requires an even stronger cleaning mode "intensive cleaning (fat and caramel)". In this case, the selection rule may decide to select the cleaning mode "intensive cleaning (fat and caramel)" which is also buffered because of the non-cleaning indicator of (c).

After MFC has completed the execution of (c), the RI-analyzer proceeds with (d) where flour is added to the intermediate cooking result of (c) and stewing is continued for another minute. The adding of flour typically generates a sticky surface in the MFC bowl which requires a different cleaning mode than (c). The ingredient identifier for flour in combination with temp 100 in the stewing mode may therefore require a "high intensity cleaning". It is to be noted that tables 140-1 and 140-2 are only exemplary of possible dependencies between recipe instruction parameters and cleaning modes. This example shows that in the cleaning requirements database there may also exist dependencies of a cleaning mode on a combination of all three check results (cooking mode, temperature control parameter and ingredient identifiers). As (d) also has a non-cleaning indicator, the "high intensity cleaning" cleaning mode is also buffered for cleaning mode consolidation. For this recipe instruction

In (e), amongst some spices water and milk are added to the intermediate cooking result of (d). The bowl content is cooked ("heating" at temp 90) for another 6 minutes. This may be associated with "intensive cleaning with washing-up liquid". "milk" at temp 90 may be associated with "high intensity cleaning". In this case, the heating is performed at relatively high rotation speed 3 to avoid burnt milk leftovers on the bowl surface. Hence, the "high intensity cleaning" mode may be selected and buffered.

In (f), the steamed potatoes (after having been peeled and sliced) are added to the bowl and the content is let steep for a minute. "Letting steep" requires only a weak cleaning mode, such as for example "cleaning with washing-up liquid". (f) is the first step after the non-cleaning indicator steps which does not have a non-cleaning indicator. That is, the consolidation module now determines the suitable cleaning mode from the currently selected cleaning mode and the buffered cleaning modes. In the example, the buffer at this stage includes:

| | |
|---|---|
| (b) | rinsing with hot water |
| (c) | intensive cleaning (fat and caramel) |
| (d) | high intensity cleaning |
| (e) | high intensity cleaning |

The selected cleaning mode for (f) is:

| | |
|---|---|
| (f) | cleaning with washing-up liquid (cleaning agent) |

The consolidation module can now apply predefined consolidation rules similar to the predefined selection rules to determine the consolidated cleaning mode which will finally be used for execution by the cleaning execution module. In the above example, the "intensive cleaning (fat and caramel)" is required to remove leftovers from (c). In case this cleaning mode would also be strong enough to remove the dirt caused by the added flour and milk in the subsequent steps, the consolidation module would provide "intensive cleaning (fat and caramel)" as the consolidated cleaning mode to the cleaning execution module (eventually with adjusted cleaning control parameters based on the temperatures used during the recipe execution). If, as a result of the consolidation rules, "intensive cleaning (fat and caramel)" turns out not to be suitable to remove leftovers from flour and milk, the consolidated cleaning mode can also be a concatenation of a plurality of cleaning modes which are to be executed consecutively. For example, the consolidated cleaning mode could be "intensive cleaning (fat and caramel) / high intensity cleaning" which causes the cleaning execution module to execute two respective consecutive cleaning actions.

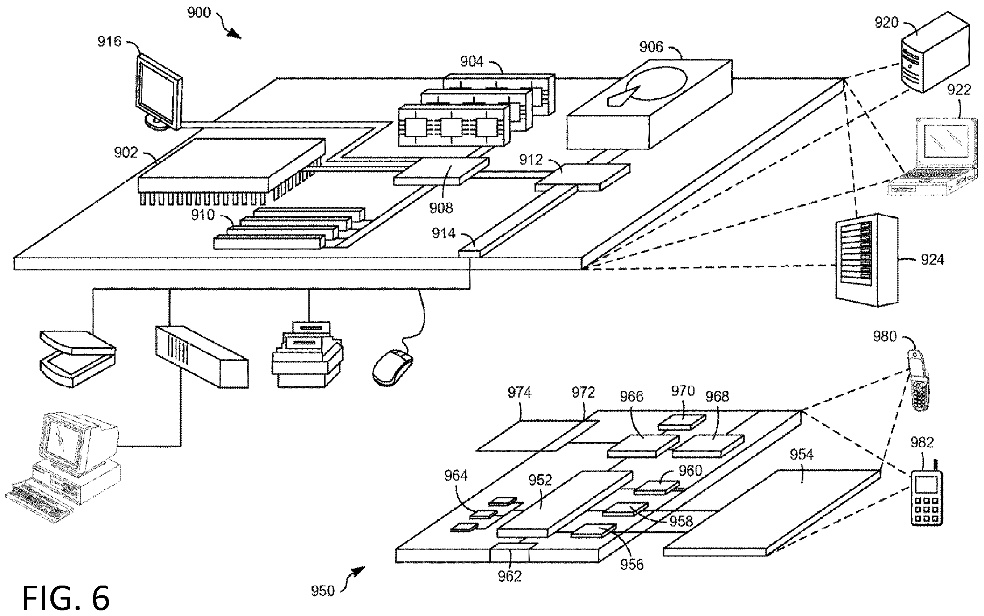

FIG. 6 is a diagram that shows an example of a generic computer device 900 and a generic mobile computer device 950, which may be used with the techniques described here. Computing device 900 relates in an exemplary embodiment to the control system 100 (cf. FIG. 1). Computing device 950 is intended to represent various forms of mobile devices, such as personal digital assistants, cellular telephones, smart phones, and other similar computing devices. Such front ends may also be implemented as integral parts of the cooking devices. In an exemplary embodiment of this disclosure the computing device 950 may serve as a frontend control device of the control system 900 which can be used by the user to logon to the control system to, for example, select recipes or overwrite a selected cleaning mode. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low-speed interface 912 connecting to low-speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high-speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low-speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, ZigBee, WLAN, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, ZigBee or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention, the scope of protection thereof being defined by the claims.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer-implemented method (1000) for recipe dependent cleaning of a multifunction cooking apparatus (3) having a bowl (3-1) with an integrated heating element and an integrated stirring element, comprising:
receiving (1100) a recipe program (281) with a plurality of recipe instructions for the preparation of a food product wherein at least a subset of recipe instructions is to be executed in said bowl (3-1),
**characterized in that**
for each recipe instruction of at least the subset of the recipe program (281):
analyzing (1200) the respective recipe instruction with regard to: a cooking mode (282) of the multifunction cooking apparatus (3), one or more control parameters (283) for said cooking mode, and one or more ingredient identifiers (284) by:
performing a mode-check (1220) to identify if said cooking mode belongs to a subset of cooking modes which require cleaning after execution of a corresponding cooking action;
performing a temperature-control-parameter-check (1240) to identify if a temperature control parameter for the cooking temperature indicates a cleaning requirement; and
performing an ingredients-check (1260) to identify whether at least one of the ingredient identifiers or a particular combination of ingredient identifiers is associated with a subset of ingredients requiring cleaning after execution of the respective recipe instruction;
determining (1300) one or more suitable cleaning modes (11, 12, 13) for said bowl dependent on the results of the mode-check, temperature-control-parameter-check and ingredients-check by using a decision module (122) which associates one or more cleaning modes with the combination of cooking mode, temperature-control-parameter and the one or more ingredient identifiers of the respective recipe instruction;
selecting (1400), in accordance with predefined selection rules (123-1), a particular cleaning mode (11) from the suitable one or more cleaning modes;
if the respective recipe instruction is associated (1500) with a non-cleaning indicator (285) in the recipe program, proceeding (1700) with the next recipe instruction;
else, executing (1600) the selected cleaning mode (11) after completed execution of the respective recipe instruction and proceeding (1700) with the next recipe instruction.

2. The method of claim 1, wherein, in the analyzing step (1200), one or more further checks are performed with regard to any of the following additional parameters associated with the respective recipe instruction: rotational-speed-control parameter for the stirring element, rotation-direction-control parameter, ingredient quantities, time interval between the end of the cooking step associated with the respective recipe instruction and the beginning of the cooking step associated with the subsequent recipe instruction, and relative time point associated with the respective recipe instruction in relation to the overall execution time of the entire recipe program, and
wherein the decision module (150) and the predefined selection rules (123-1) are further adapted such that the determining (1300) and selecting steps (1400) take the additional parameters into account.

3. The method of claim 1 or 2, wherein the selected cleaning mode (11) defines the setting of one or more of the following cleaning control parameters (CI1) for the cooking apparatus: rotational-speed, rotation direction, cleaning duration, temperature, quantity of cleansing agent.

4. The method of claim 3, wherein default control parameters of the selected cleaning mode (11) are adjusted (1540) in accordance with predefined dependencies on a lead indicator of the respective recipe instruction.

5. The method of claim 4, wherein the lead indicator is the temperature-control-parameter or a combination of ingredient identifiers.

6. The method of any of the previous claims, wherein, the selected particular cleaning mode (11) is replaced (1520) by a cleaning mode (12) received from a user (1) of the cooking apparatus prior to executing (1600).

7. The method of any of the previous claims, wherein the recipe program includes external recipe instructions to be executed by one or more further cooking appliances requiring cleaning by a remote cleaning appliance (5), and wherein analyzing (1200) includes the analysis of such external recipe instructions, wherein the cleaning mode selected for the remote cleaning appliance (5) includes cleaning control parameters for said remote cleaning appliance (5).

8. The method of any of the previous claims further comprising:
if the respective recipe instruction is associated with a non-cleaning indicator in the recipe program, storing (1560) the selected cleaning mode for the respective recipe instruction; and
consolidating (1580) the stored cleaning mode with one or more stored or selected cleaning modes of further consolidated recipe instructions so that the control parameters of the resulting consolidated cleaning mode (15') are adjusted to remove dirt resulting from all respective cooking steps when executing the consolidated cleaning mode after completed execution of the first consolidated recipe instruction not being associated with a non-cleaning indicator.

9. A computer program product for recipe dependent cleaning of a multifunction cooking apparatus, the computer program product comprising computer readable instructions that, when loaded into a memory of a computing device and executed by at least one processor of the computing device, cause the computing device to perform the method according to any one of the previous claims.

10. A computer system (100) for controlling recipe dependent cleaning of a multifunction cooking apparatus (3) having a bowl (3-1) with an integrated heating element and an integrated stirring element, comprising:
an interface (110) adapted to receive a recipe program (281) with a plurality of recipe instructions for the preparation of a food product wherein at least a subset of recipe instructions is to be executed in said bowl;
a recipe execution engine (130) adapted to execute the recipe instructions to control at least the execution of respective cooking steps by the multifunction cooking apparatus (3);
**characterized in that**
a cleaning control module (120) comprising a recipe instruction analyzer module (121), a cleaning mode selector module (123), and a cleaning execution module (124) with:
the recipe instruction analyzer module (121) adapted to analyze a respective recipe instruction with regard to: a cooking mode of the multifunction cooking apparatus, one or more control parameters for said cooking mode, and one or more ingredient identifiers by:
performing a mode-check to identify if the cooking mode belongs to a subset of cooking modes which require cleaning after execution of a corresponding cooking action;
performing a temperature-control-parameter-check to identify if a temperature control parameter for the cooking temperature indicates a cleaning requirement; and
performing an ingredients-check to identify whether at least one of the ingredient identifiers or a particular combination of ingredient identifiers is associated with a subset of ingredients requiring cleaning after execution of the respective recipe instruction;
the recipe instruction analyzer module further adapted to determine one or more suitable cleaning modes (11, 12, 13) for said bowl (3-1) dependent on the results of the mode-check, temperature-control-parameter-check and ingredients-check by using a decision module (122) which associates one or more cleaning modes with the combination of cooking mode, temperature-control-parameter and the one or more ingredient identifiers of the respective recipe instruction;
the cleaning mode selector module (123) adapted to select, in accordance with predefined selection rules, a particular cleaning mode (11) from the suitable one or more cleaning modes; and
the cleaning execution module (124) adapted to execute the selected cleaning mode (11) after completed execution of the respective recipe instruction if the respective recipe instruction is not associated with a non-cleaning indicator (285) in the recipe program and to trigger the analyzer module (121) for proceeding with the next recipe instruction, and else to trigger the analyzer module (121) for proceeding with the next recipe instruction.

11. The system of claim 10, wherein,
the analyzer module (121) is further adapted to perform one or more further checks with regard to any of the following additional parameters: rotational-speed-control parameter for the stirring element, rotation-direction-control parameter, ingredient quantities, time interval between the end of the cooking step associated with the respective recipe instruction and the beginning of the cooking step associated with the subsequent recipe instruction, and relative time point associated with the respective recipe instruction in relation to the overall execution time of the entire recipe program; and
wherein the decision module (122) and the predefined selection rules (123-1) are further adapted such that the determination module (122) and the selector module (123) take the additional parameters into account.

12. The system of claim 10 or 11, wherein the selected cleaning mode (11) defines the setting of one or more of the following control parameters of the cooking apparatus: rotational-speed, rotation direction, cleaning duration, temperature, quantity of cleansing agent.

13. The system of claim 12, further comprising a parameter adjustment module (126) adapted to adjust default control parameters of the selected cleaning mode (11) in accordance with a predefined dependency on a lead indicator of the respective recipe instruction.

14. The system of any of claims 10 to 13, wherein the recipe program includes external recipe instructions to be executed by one or more further cooking appliances requiring cleaning by a remote cleaning appliance (5), and wherein the analyzer module (121) is further adapted to also analyze such external recipe instructions wherein the cleaning mode selected for the remote cleaning appliance (5) includes cleaning control parameters for said remote cleaning appliance (5).

15. The system of any of claims 10 to 14, further comprising a cleaning mode consolidation module (160) adapted to:
store the selected cleaning mode for the respective recipe instruction if the respective recipe instruction is associated with a non-cleaning indicator in the recipe program; and
consolidate the stored cleaning mode with one or more stored or selected cleaning modes of further consolidated recipe instructions so that the control parameters of the resulting consolidated cleaning mode (15') are adjusted to remove dirt resulting from all respective cooking steps when executing the consolidated cleaning mode after completed execution of the first consolidated recipe instruction not being associated with a non-cleaning indicator.

## Patentansprüche

1. Ein computerimplementiertes Verfahren (1000) zur rezeptabhängigen Reinigung eines Multifunktions-Kochgeräts (3) mit einer Schüssel (3-1), die ein integriertes Heizelement und ein integriertes Rührelement aufweist, umfassend:
Empfangen (1100) eines Rezeptprogramms (281) mit einer Vielzahl von Rezeptanweisungen zur Zubereitung eines Lebensmittels, wobei mindestens eine Teilmenge der Rezeptanweisungen in der Schüssel (3-1) ausgeführt werden soll,
**dadurch gekennzeichnet, dass**
für jede Rezeptanweisung zumindest der Teilmenge des Rezeptprogramms (281):
die jeweilige Rezeptanweisung hinsichtlich eines Kochmodus (282) des Multifunktions-Kochgeräts (3), eines oder mehrerer Steuerparameter (283) für den Kochmodus und einer oder mehrerer Zutatenkennungen (284) analysiert wird (1200), durch:
Durchführung einer Modusprüfung (1220), um festzustellen, ob der Kochmodus zu einer Teilmenge von Kochmodi gehört, die nach Ausführung eines entsprechenden Kochvorgangs eine Reinigung erfordern;
Durchführung einer Temperaturregelungsparameterprüfung (1240), um festzustellen, ob ein Temperaturregelungsparameter für die Gartemperatur auf einen Reinigungsbedarf hinweist; und
Durchführung einer Zutatenprüfung (1260), um festzustellen, ob mindestens einer der Zutatenkennungen oder eine bestimmte Kombination von Zutatenkennungen einer Teilmenge von Zutaten zugeordnet ist, die nach Ausführung der jeweiligen Rezeptanweisung eine Reinigung erfordern;
Ermitteln (1300) eines oder mehrerer geeigneter Reinigungsmodi (11, 12, 13) für die genannte Schüssel in Abhängigkeit von den Ergebnissen der Modusprüfung, der Temperaturregelungsparameterprüfung und der Zutatenprüfung unter Verwendung eines Entscheidungsmoduls (122), das einen oder mehrere Reinigungsmodi der Kombination aus Kochmodus, Temperaturregelungsparameter und der einen oder den mehreren Zutatenkennungen der jeweiligen Rezeptanweisung zuordnet;
Auswählen (1400) eines bestimmten Reinigungsmodus (11) aus dem einen oder den mehreren geeigneten Reinigungsmodi gemäß vordefinierten Auswahlregeln (123-1);
falls die jeweilige Rezeptanweisung im Rezeptprogramm einem Nicht-Reinigungs-Indikator (285) zugeordnet ist (1500), Fortfahren (1700) mit der nächsten Rezeptanweisung;
ansonsten Ausführen (1600) des ausgewählten Reinigungsmodus (11) nach abgeschlossener Ausführung der jeweiligen Rezeptanweisung und Fortfahren (1700) mit der nächsten Rezeptanweisung.

2. Verfahren nach Anspruch 1, wobei im Analyseschritt (1200) eine oder mehrere weitere Prüfungen hinsichtlich eines der folgenden zusätzlichen Parameter durchgeführt werden, die der jeweiligen Rezeptanweisung zugeordnet sind: Drehzahlsteuerungsparameter für das Rührelement, Drehrichtungssteuerungsparameter, Zutatenmengen, Zeitintervall zwischen dem Ende des der jeweiligen Rezeptanweisung zugeordneten Kochschritts und dem Beginn des der nachfolgenden Rezeptanweisung zugeordneten Kochschritts, sowie relativer Zeitpunkt, der der jeweiligen Rezeptanweisung in Bezug auf die Gesamtlaufzeit des gesamten Rezeptprogramms zugeordnet ist, und
wobei das Entscheidungsmodul (150) und die vordefinierten Auswahlregeln (123-1) ferner so ausgelegt sind, dass die Bestimmungs- (1300) und Auswahlschritte (1400) die zusätzlichen Parameter berücksichtigen.

3. Verfahren nach Anspruch 1 oder 2, wobei der ausgewählte Reinigungsmodus (11) die Einstellung eines oder mehrerer der folgenden Reinigungssteuerparameter (CI1) für das Kochgerät definiert: Drehzahl, Drehrichtung, Reinigungsdauer, Temperatur, Menge an Reinigungsmittel.

4. Verfahren nach Anspruch 3, wobei Standardsteuerparameter des ausgewählten Reinigungsmodus (11) gemäß vordefinierten Abhängigkeiten von einem Leitindikator der jeweiligen Rezeptanweisung angepasst werden (1540).

5. Verfahren nach Anspruch 4, wobei der Leitindikator der Temperatursteuerungsparameter oder eine Kombination von Zutatenkennungen ist.

6. Verfahren nach einem der vorstehenden Ansprüche, wobei der ausgewählte bestimmte Reinigungsmodus (11) vor der Ausführung (1600) durch einen Reinigungsmodus (12) ersetzt wird (1520), der von einem Benutzer (1) des Kochgeräts empfangen wurde.

7. Verfahren nach einem der vorstehenden Ansprüche, wobei das Rezeptprogramm externe Rezeptanweisungen enthält, die von einem oder mehreren weiteren Kochgeräten ausgeführt werden sollen, die eine Reinigung durch ein entferntes Reinigungsgerät (5) erfordern, und wobei das Analysieren (1200) die Analyse solcher externer Rezeptanweisungen umfasst, wobei der für das entfernte Reinigungsgerät (5) ausgewählte Reinigungsmodus Reinigungssteuerparameter für das entfernte Reinigungsgerät (5) umfasst.

8. Verfahren nach einem der vorstehenden Ansprüche, das ferner umfasst:
wenn die jeweilige Rezeptanweisung im Rezeptprogramm mit einem Nicht-ReinigungsIndikator verknüpft ist, das Speichern (1560) des ausgewählten Reinigungsmodus für die jeweilige Rezeptanweisung; und
das Konsolidieren (1580) des gespeicherten Reinigungsmodus mit einem oder mehreren gespeicherten oder ausgewählten Reinigungsmodi weiterer konsolidierter Rezeptanweisungen, sodass die Steuerparameter des resultierenden konsolidierten Reinigungsmodus (15') so angepasst werden, dass bei der Ausführung des konsolidierten Reinigungsmodus nach abgeschlossener Ausführung der ersten konsolidierten Rezeptanweisung, die nicht mit einem Nicht-Reinigungs-Indikator verknüpft ist, Verschmutzungen entfernt werden, die aus allen jeweiligen Kochschritten resultieren.

9. Ein Computerprogrammprodukt zur rezeptabhängigen Reinigung eines Multifunktions-Kochgeräts, wobei das Computerprogrammprodukt computerlesbare Anweisungen umfasst, die, wenn sie in einen Speicher einer Recheneinheit geladen und von mindestens einem Prozessor der Recheneinheit ausgeführt werden, bewirken, dass die Recheneinheit das Verfahren gemäß einem der vorstehenden Ansprüche ausführt.

10. Ein Computersystem (100) zur Steuerung der rezeptabhängigen Reinigung eines Multifunktions-Kochgeräts (3) mit einer Schüssel (3-1), die ein integriertes Heizelement und ein integriertes Rührelement aufweist, umfassend:
eine Schnittstelle (110), die dazu ausgelegt ist, ein Rezeptprogramm (281) mit einer Vielzahl von Rezeptanweisungen zur Zubereitung eines Lebensmittels zu empfangen, wobei mindestens eine Teilmenge der Rezeptanweisungen in der genannten Schüssel ausgeführt werden soll;
eine Rezeptausführungs-Engine (130), die dazu ausgelegt ist, die Rezeptanweisungen auszuführen, um zumindest die Ausführung der jeweiligen Kochschritte durch das Multifunktions-Kochgerät (3) zu steuern;
**dadurch gekennzeichnet, dass**
ein Reinigungssteuerungsmodul (120) vorgesehen ist, das ein Rezeptanweisungs-Analysemodul (121), ein Reinigungsmodus-Auswahlmodul (123) und ein Reinigungsausführungsmodul (124) umfasst, mit:
dem Rezeptanweisungs-Analysemodul (121) dazu ausgelegt, eine jeweilige Rezeptanweisung hinsichtlich eines Kochmodus des Multifunktions-Kochgeräts, eines oder mehrerer Steuerparameter für diesen Kochmodus und eines oder mehrerer Zutatenkennungen zu analysieren, durch:
Durchführung einer Modusprüfung, um festzustellen, ob der Kochmodus zu einer Teilmenge von Kochmodi gehört, die nach Ausführung eines entsprechenden Kochvorgangs eine Reinigung erfordern;
Durchführung einer Temperaturregelungsparameterprüfung, um festzustellen, ob ein Temperaturregelungsparameter für die Gartemperatur auf einen Reinigungsbedarf hinweist; und
Durchführung einer Zutatenprüfung, um festzustellen, ob mindestens einer der Zutatenkennungen oder eine bestimmte Kombination von Zutatenkennungen mit einer Teilmenge von Zutaten assoziiert ist, die nach Ausführung der jeweiligen Rezeptanweisung eine Reinigung erfordern;
wobei das Rezeptanweisungs-Analysemodul ferner dazu ausgelegt ist, einen oder mehrere geeignete Reinigungsmodi (11, 12, 13) für die genannte Schüssel (3-1) in Abhängigkeit von den Ergebnissen der Modusprüfung, der Temperaturregelungsparameterprüfung und der Zutatenprüfung unter Verwendung eines Entscheidungsmoduls (122), das einen oder mehrere Reinigungsmodi der Kombination aus Kochmodus, Temperaturregelungsparameter und dem einen oder den mehreren Zutatenkennzeichen der jeweiligen Rezeptanweisung zuordnet;
das Reinigungsmodus-Auswahlmodul (123), das dazu ausgelegt ist, gemäß vordefinierten Auswahlregeln einen bestimmten Reinigungsmodus (11) aus dem einen oder den mehreren geeigneten Reinigungsmodi auszuwählen; und
das Reinigungsausführungsmodul (124), das dazu ausgelegt ist, den ausgewählten Reinigungsmodus (11) nach abgeschlossener Ausführung der jeweiligen Rezeptanweisung auszuführen, sofern die jeweilige Rezeptanweisung im Rezeptprogramm nicht mit einem Nicht-Reinigungs-Indikator (285) verknüpft ist, und das Analysemodul (121) zur Fortsetzung mit der nächsten Rezeptanweisung anzusteuern, und andernfalls das Analysemodul (121) zur Fortsetzung mit der nächsten Rezeptanweisung anzusteuern.

11. Das System nach Anspruch 10, wobei
das Analysemodul (121) ferner dazu ausgelegt ist, eine oder mehrere weitere Prüfungen hinsichtlich eines der folgenden zusätzlichen Parameter durchzuführen:
Drehzahlsteuerungsparameter für das Rührelement, Drehrichtungssteuerungsparameter, Zutatenmengen, Zeitintervall zwischen dem Ende des der jeweiligen Rezeptanweisung zugeordneten Kochschritts und dem Beginn des der nachfolgenden Rezeptanweisung zugeordneten Kochschritts, sowie den relativen Zeitpunkt, der der jeweiligen Rezeptanweisung in Bezug auf die Gesamtlaufzeit des gesamten Rezeptprogramms zugeordnet ist; und
wobei das Entscheidungsmodul (122) und die vordefinierten Auswahlregeln (123-1) ferner so ausgelegt sind, dass das Entscheidungsmodul (122) und das Auswahlmodul (123) die zusätzlichen Parameter berücksichtigen.

12. Das System nach Anspruch 10 oder 11, wobei der ausgewählte Reinigungsmodus (11) die Einstellung eines oder mehrerer der folgenden Steuerparameter des Kochgeräts definiert: Drehzahl, Drehrichtung, Reinigungsdauer, Temperatur, Menge an Reinigungsmittel.

13. Das System nach Anspruch 12, das ferner ein Parameteranpassungsmodul (126) umfasst, das dazu ausgelegt ist, Standardsteuerparameter des ausgewählten Reinigungsmodus (11) gemäß einer vordefinierten Abhängigkeit von einem Leitindikator der jeweiligen Rezeptanweisung anzupassen.

14. Das System nach einem der Ansprüche 10 bis 13, wobei das Rezeptprogramm externe Rezeptanweisungen enthält, die von einem oder mehreren weiteren Kochgeräten ausgeführt werden sollen, die eine Reinigung durch ein entferntes Reinigungsgerät (5) erfordern, und wobei das Analysemodul (121) ferner dazu ausgelegt ist, auch solche externen Rezeptanweisungen zu analysieren, wobei der für das entfernte Reinigungsgerät (5) ausgewählte Reinigungsmodus Reinigungssteuerungsparameter für das entfernte Reinigungsgerät (5) umfasst.

15. System nach einem der Ansprüche 10 bis 14, das ferner ein Modul (160) zur Konsolidierung von Reinigungsmodi umfasst, das dazu ausgelegt ist:
den ausgewählten Reinigungsmodus für die jeweilige Rezeptanweisung zu speichern, wenn die jeweilige Rezeptanweisung im Rezeptprogramm mit einem Nicht-Reinigungsindikator verknüpft ist; und
den gespeicherten Reinigungsmodus mit einem oder mehreren gespeicherten oder ausgewählten Reinigungsmodi weiterer konsolidierter Rezeptanweisungen zu konsolidieren, sodass die Steuerparameter des resultierenden konsolidierten Reinigungsmodus (15') so angepasst werden, dass bei der Ausführung des konsolidierten Reinigungsmodus nach abgeschlossener Ausführung der ersten konsolidierten Rezeptanweisung, die nicht mit einem Nicht-Reinigungs-Indikator verknüpft ist, Verschmutzungen entfernt werden, die aus allen jeweiligen Kochschritten resultieren.

## Revendications

1. Procédé mis en œuvre par ordinateur (1000) pour le nettoyage, en fonction d'une recette, d'un appareil de cuisson multifonction (3) comportant un bol (3-1) avec un élément chauffant intégré et un élément d'agitation intégré, comprenant :
la réception (1100) d'un programme de recette (281) comportant une pluralité d'instructions de recette pour la préparation d'un produit alimentaire, dans lequel au moins un sous-ensemble d'instructions de recette doit être exécuté dans ledit bol (3-1),
**caractérisé en ce que**
pour chaque instruction de recette d'au moins ledit sous-ensemble du programme de recette (281) :
analyser (1200) l'instruction de recette respective au regard : d'un mode de cuisson (282) de l'appareil de cuisson multifonction (3), d'un ou plusieurs paramètres de contrôle (283) pour ledit mode de cuisson, et d'un ou plusieurs identifiants d'ingrédients (284) en :
effectuer une vérification de mode (1220) afin de déterminer si ledit mode de cuisson appartient à un sous-ensemble de modes de cuisson nécessitant un nettoyage après l'exécution d'une action de cuisson correspondante ;
effectuer une vérification des paramètres de contrôle de température (1240) afin de déterminer si un paramètre de contrôle de température pour la température de cuisson indique une nécessité de nettoyage ; et
effectuer une vérification des ingrédients (1260) afin de déterminer si au moins l'un des identifiants d'ingrédients ou une combinaison particulière d'identifiants d'ingrédients est associé à un sous-ensemble d'ingrédients nécessitant un nettoyage après l'exécution de l'instruction de recette correspondante ;
déterminer (1300) un ou plusieurs modes de nettoyage adaptés (11, 12, 13) pour ledit bol en fonction des résultats de la vérification du mode, de la vérification des paramètres de contrôle de la température et de la vérification des ingrédients, à l'aide d'un module de décision (122) qui associe un ou plusieurs modes de nettoyage à la combinaison du mode de cuisson, des paramètres de contrôle de la température et d'un ou plusieurs des identifiants d'ingrédients de l'instruction de recette correspondante ;
sélectionner (1400), conformément à des règles de sélection prédéfinies (123-1), un mode de nettoyage particulier (11) parmi le ou les plusieurs modes de nettoyage adaptés ;
si l'instruction de recette correspondante est associée (1500) à un indicateur « sans nettoyage » (285) dans le programme de recettes, passer (1700) à l'instruction de recette suivante ;
sinon, exécuter (1600) le mode de nettoyage sélectionné (11) une fois l'exécution de l'instruction de recette correspondante terminée et passer (1700) à l'instruction de recette suivante.

2. Procédé selon la revendication 1, dans lequel, lors de l'étape d'analyse (1200), une ou plusieurs vérifications supplémentaires sont effectuées concernant l'un quelconque des paramètres supplémentaires suivants associés à l'instruction de recette correspondante :
paramètre de commande de la vitesse de rotation de l'élément d'agitation, paramètre de commande du sens de rotation, quantités d'ingrédients, intervalle de temps entre la fin de l'étape de cuisson associée à l'instruction de recette correspondante et le début de l'étape de cuisson associée à l'instruction de recette suivante, et le moment relatif associé à l'instruction de recette correspondante par rapport à la durée totale d'exécution de l'ensemble du programme de recette, et
dans lequel le module de décision (150) et les règles de sélection prédéfinies (123-1) sont en outre adaptés de telle sorte que les étapes de détermination (1300) et de sélection (1400) tiennent compte des paramètres supplémentaires.

3. Procédé selon la revendication 1 ou 2, dans lequel le mode de nettoyage sélectionné (11) définit le réglage d'un ou plusieurs des paramètres de commande de nettoyage (CI1) suivants pour l'appareil de cuisson : vitesse de rotation, sens de rotation, durée de nettoyage, température, quantité d'agent nettoyant.

4. Procédé selon la revendication 3, dans lequel les paramètres de commande par défaut du mode de nettoyage sélectionné (11) sont ajustés (1540) conformément à des dépendances prédéfinies par rapport à un indicateur principal de l'instruction de recette correspondante.

5. Procédé selon la revendication 4, dans lequel l'indicateur principal est le paramètre de contrôle de la température ou une combinaison d'identifiants d'ingrédients.

6. Procédé selon l'une quelconque des revendications précédentes, dans lequel le mode de nettoyage particulier sélectionné (11) est remplacé (1520) par un mode de nettoyage (12) reçu d'un utilisateur (1) de l'appareil de cuisson avant l'exécution (1600).

7. Procédé selon l'une quelconque des revendications précédentes, dans lequel le programme de recette comprend des instructions de recette externes destinées à être exécutées par un ou plusieurs autres appareils de cuisson nécessitant un nettoyage par un appareil de nettoyage à distance (5), et dans lequel l'analyse (1200) comprend l'analyse de ces instructions de recette externes, le mode de nettoyage sélectionné pour l'appareil de nettoyage à distance (5) comprenant des paramètres de contrôle de nettoyage pour ledit appareil de nettoyage à distance (5).

8. Procédé selon l'une quelconque des revendications précédentes, comprenant en outre :
si l'instruction de recette correspondante est associée à un indicateur « sans nettoyage » dans le programme de recette, le stockage (1560) du mode de nettoyage sélectionné pour l'instruction de recette correspondante ; et
la consolidation (1580) du mode de nettoyage stocké avec un ou plusieurs modes de nettoyage stockés ou sélectionnés d'instructions de recette supplémentaires consolidées, de sorte que les paramètres de commande du mode de nettoyage consolidé résultant (15') soient ajustés pour éliminer les salissures résultant de toutes les étapes de cuisson respectives lors de l'exécution du mode de nettoyage consolidé après l'exécution complète de la première instruction de recette consolidée n'étant pas associée à un indicateur « sans nettoyage » .

9. Produit logiciel destiné au nettoyage en fonction d'une recette d'un appareil de cuisson multifonction, le produit logiciel comprenant des instructions lisibles par ordinateur qui, lorsqu'elles sont chargées dans une mémoire d'un dispositif informatique et exécutées par au moins un processeur dudit dispositif informatique, amènent le dispositif informatique à mettre en œuvre le procédé selon l'une quelconque des revendications précédentes.

10. Système informatique (100) destiné à commander le nettoyage en fonction d'une recette d'un appareil de cuisson multifonction (3) comportant un bol (3-1) avec un élément chauffant intégré et un élément d'agitation intégré, comprenant :
une interface (110) adaptée pour recevoir un programme de recette (281) comportant une pluralité d'instructions de recette pour la préparation d'un produit alimentaire, dans lequel au moins un sous-ensemble d'instructions de recette doit être exécuté dans ledit bol ;
un moteur d'exécution de recette (130) adapté pour exécuter les instructions de recette afin de commander au moins l'exécution des étapes de cuisson respectives par l'appareil de cuisson multifonction (3) ;
**caractérisé en ce qu'**
un module de commande de nettoyage (120) comprenant un module d'analyse des instructions de recette (121), un module de sélection du mode de nettoyage (123) et un module d'exécution du nettoyage (124) comportant :
le module d'analyse des instructions de recette (121) est adapté pour analyser une instruction de recette respective en ce qui concerne : un mode de cuisson de l'appareil de cuisson multifonction, un ou plusieurs paramètres de contrôle pour ledit mode de cuisson, et un ou plusieurs identifiants d'ingrédients, en :
effectuant une vérification de mode afin de déterminer si le mode de cuisson appartient à un sous-ensemble de modes de cuisson nécessitant un nettoyage après l'exécution d'une action de cuisson correspondante ;
effectuer une vérification des paramètres de contrôle de la température afin de déterminer si un paramètre de contrôle de la température de cuisson indique la nécessité d'un nettoyage ; et
effectuer une vérification des ingrédients afin de déterminer si au moins l'un des identifiants d'ingrédients ou une combinaison particulière d'identifiants d'ingrédients est associé à un sous-ensemble d'ingrédients nécessitant un nettoyage après l'exécution de l'instruction de recette correspondante ;
le module d'analyse des instructions de recette étant en outre adapté pour déterminer un ou plusieurs modes de nettoyage appropriés (11, 12, 13) pour ledit bol (3-1) en fonction des résultats de la vérification du mode, de la vérification des paramètres de contrôle de la température et de la vérification des ingrédients, à l'aide d'un module de décision (122) qui associe un ou plusieurs modes de nettoyage à la combinaison du mode de cuisson, du paramètre de contrôle de la température et du ou des identifiants d'ingrédients de l'instruction de recette correspondante ;
le module de sélection de mode de nettoyage (123), adapté pour sélectionner, conformément à des règles de sélection prédéfinies, un mode de nettoyage particulier (11) parmi le ou les modes de nettoyage adaptés ; et
le module d'exécution du nettoyage (124) adapté pour exécuter le mode de nettoyage sélectionné (11) une fois l'exécution de l'instruction de recette correspondante terminée, si cette instruction n'est pas associée à un indicateur « sans nettoyage » (285) dans le programme de recette, et pour déclencher le module d'analyse (121) afin de passer à l'instruction de recette suivante, et sinon pour déclencher le module d'analyse (121) afin de passer à l'instruction de recette suivante.

11. Système selon la revendication 10, dans lequel,
le module d'analyse (121) est en outre adapté pour effectuer une ou plusieurs vérifications supplémentaires concernant l'un quelconque des paramètres supplémentaires suivants : paramètre de contrôle de la vitesse de rotation de l'élément d'agitation, paramètre de contrôle du sens de rotation, quantités d'ingrédients, intervalle de temps entre la fin de l'étape de cuisson associée à l'instruction de recette correspondante et le début de l'étape de cuisson associée à l'instruction de recette suivante, et le moment relatif associé à l'instruction de recette correspondante par rapport à la durée totale d'exécution de l'ensemble du programme de recette ; et dans lequel le module de décision (122) et les règles de sélection prédéfinies (123-1) sont en outre adaptés de telle sorte que le module de détermination (122) et le module de sélection (123) prennent en compte les paramètres supplémentaires.

12. Système selon la revendication 10 ou 11, dans lequel le mode de nettoyage sélectionné (11) définit le réglage d'un ou plusieurs des paramètres de commande suivants de l'appareil de cuisson : vitesse de rotation, sens de rotation, durée de nettoyage, température, quantité de produit nettoyant.

13. Système selon la revendication 12, comprenant en outre un module de réglage des paramètres (126) adapté pour ajuster les paramètres de commande par défaut du mode de nettoyage sélectionné (11) conformément à une dépendance prédéfinie vis-à-vis d'un indicateur principal de l'instruction de recette correspondante.

14. Système selon l'une quelconque des revendications 10 à 13, dans lequel le programme de recette comprend des instructions de recette externes destinées à être exécutées par un ou plusieurs autres appareils de cuisson nécessitant un nettoyage par un appareil de nettoyage à distance (5), et dans lequel le module d'analyse (121) est en outre adapté pour analyser également ces instructions de recette externes, le mode de nettoyage sélectionné pour l'appareil de nettoyage à distance (5) comprenant des paramètres de commande de nettoyage pour ledit appareil de nettoyage à distance (5).

15. Système selon l'une quelconque des revendications 10 à 14, comprenant en outre un module de consolidation de mode de nettoyage (160) adapté pour :
stocker le mode de nettoyage sélectionné pour l'instruction de recette correspondante si celle-ci est associée à un indicateur « sans nettoyage » dans le programme de recettes ; et
consolider le mode de nettoyage stocké avec un ou plusieurs modes de nettoyage stockés ou sélectionnés d'instructions de recette supplémentaires consolidées, de sorte que les paramètres de commande du mode de nettoyage consolidé résultant (15') soient ajustés pour éliminer les salissures résultant de toutes les étapes de cuisson respectives lors de l'exécution du mode de nettoyage consolidé après l'exécution complète de la première instruction de recette consolidée n'étant pas associée à un indicateur « sans nettoyage » .
